# EUROPEAN PATENT SPECIFICATION

(11) **EP 4 493 865 B1**
(45) Date of publication and mention of the grant of the patent: **26.08.2026**
(21) Application number: 23709979.1
(22) Date of filing: 07.03.2023
(51) Int. Cl.: F24H 9/02, F24H 1/18, F24H 4/04

(54) **FLOW GUIDING APPARATUS**
STRÖMUNGSLEITVORRICHTUNG
DISPOSITIF DE GUIDAGE DU FLUX

(30) Priority: 14.03.2022 EP 22161873; 21.03.2022 EP 22163167; 21.03.2022 EP 22163164; 01.04.2022 EP 22166330; 01.04.2022 EP 22166331; 01.04.2022 EP 22166332; 06.12.2022 EP 22211748
(43) Date of publication of application: 22.01.2025
(73) Proprietor: BDR Thermea Group B.V., 7332 BD Apeldoorn (NL)
(72) Inventor: ANTOINE, Florian, 7332 BD Apeldoorn (NL); CHASSAGNARD, Benjamin, 7332 BD Apeldoorn (NL); KIEFFER, Damien, 7332 BD Apeldoorn (NL)
(74) Representative: Grabovac, Dalibor
(86) International application number: PCT/EP2023/055639
(87) International publication number: WO 2023/174738

(56) References cited:
- EP-A1- 3 128 252
- EP-A1- 3 734 194
- CN-A- 104 266 354
- CN-A- 104 736 941
- US-A- 2 516 094

## Description

The invention relates to a flow guiding apparatus for a heating device and to a heating device comprising said apparatus. Also, the invention relates to a use of said flow guiding apparatus in a heating device, in particular an air-source heat pump water heater using a flammable refrigerant.

A heating device like a heat pump is a device able to warm a closed space of a building or to warm domestic hot water by transferring thermal energy from a source to another. An air-source heat pump water heater is a device using the heat pump technology to use energy from air to heat the domestic water contained in a tank. This is obtained using a refrigeration cycle carried out in the opposite direction of the heat transfer. Among the different refrigeration cycles, the most widely used is the vapor compression refrigeration, in which a refrigerant undergoes phase changes.

For a heat pump water heater, vapor-compression refrigeration uses a circulating liquid refrigerant as the medium which absorbs heat from one source, compresses it, thereby increasing its temperature before releasing it in another source. A vapor-compression refrigeration system usually comprises at least a compressor, an expansion valve and, two heat exchangers and a network of pipes connecting these elements and in which the refrigerant circulates. In a heating mode the external heat exchanger is the evaporator and the internal one being the condenser. In particular, the thermodynamic circuit of a heat pump water heater comprises a first stage, or hot stage, including the condenser, and a second stage, or cold stage, including the evaporator. A heat transfer fluid circulates in a closed circuit, wherein this fluid flows in the evaporator at low pressure. At the evaporator outlet, the fluid is compressed by the compressor and flows in the condenser before passing through an expansion valve. The valve lowers the fluid's pressure so that the fluid can return to the evaporator. The condenser is usually arranged in, or around, a water tank in order to determine a heat transfer, whereas the evaporator is crossed by an air circulation path and is coupled to a fan element.

Through the evaporator circulate fluids such as R410A, R-32, R134a, to evaporate/vaporize from liquid to gas within the system while absorbing heat from a source in the process. However, environmental constraints prevent the use of historical refrigerants and lead to the use of new so-called natural fluids. These fluids are highly flammable and can therefore generate risks of explosion in the event of a leak in an electrical appliance that has not been designed to control this risk. For example, the presence of the compressor and more generally of a source of ignition close to the evaporator can strongly affect the safety of the heating device. An ignition source is an item or substance capable of an energy release sufficient to ignite a flammable fluid. It can be of several natures including hot source and electrical, mechanical or chemical activation energy.

EP3128252A1 describes a heat pump enclosed within a casing defined by top, side and bottom insulated walls and including an airflow region defined by an air inlet, an intermediate portion and an outgoing portion arranged to cover the front face of an evaporator heat exchanger. The arrangement thus keeps any refrigerant leaked into the airflow situated upstream from the evaporator from making contact with a compressor.

It is therefore desirable to obtain an apparatus or system able to control the situation of leakage of flammable fluid at the evaporator.

The object is solved by a flow guiding apparatus for a heating device, in particular an air source heat pump water heater using a flammable refrigerant, the heating device including at least a heat exchanger and a compressor element, the apparatus comprising a housing couplable to a casing of the heating device and comprising an air inlet and an air outlet, the housing defining an air flow region, wherein the housing is configured so that the heat exchanger is arranged inside the air flow region for exchanging heat in said air flow region, and so that air is guided to flow from the air inlet to the heat exchanger and from the heat exchanger to the air outlet, the air being confined in the air flow region and being prevented from being in contact with the compressor element that is arranged outside the air flow region, wherein the housing comprises a first component for holding the heat exchanger and the compressor element connectable to the heating device and a second component connectable to the heating device, to form the air flow region, wherein the second component is at least in part fixable to, and removable from, the first component, the first component and the second component being both shaped to guide air to flow from the air inlet to the heat exchanger and from the heat exchanger to the air outlet, the first component is connected to the second component to form a connecting region that is airtight and/or watertight, and the first component and the second component are one-piece parts.

Advantageously, the apparatus can be integrated in a heat pump water heater and the heat exchanger is an evaporator operating with a flammable refrigerant heavier than air. That means, the heat exchanger, in particular evaporator exchanges heat form the air to the refrigerant, The housing is shaped such that it accommodates the evaporator and guides the air flow passing through the evaporator in a closed air flow region thereby preventing any possible leakage of flammable refrigerant fluid present in the evaporator, thereby preventing any possible contact with other components of the heating device (hot source or with activation energy), e.g. the compressor, that could trigger an explosion.

This apparatus eliminates the risk of explosion due to a leak in the evaporator. The evaporator is one of the main causes of leakage because it is the element that gathers the most brazing points, it has the longest tube length and it is subject to corrosion due to the contact of copper, aluminum and other metals and the water from the condensation of the air in the heat exchanger. Water accelerates the corrosion phenomenon by serving as a conductive medium for the transfer of particles responsible for the corrosion. In addition, the apparatus optimizes the thermal and acoustic performance of the heating device thanks to an air flow guided throughout its circuit, from the inlet to the outlet. As a matter of fact, the air flow has limited disturbances and therefore a low pressure drop.

With this apparatus, the compressor is no longer in direct interaction with the air openings of the evaporator. The walls of the housing prevent the direct propagation of sound from the compressor to the openings. This reduces the overall sound power of the heating device and improves user comfort.

It is noted that typically a thermal insulating foam is placed around the compressor. Sometimes an electrical heating element is even added. Due to the fact that the compressor is no longer in the air flow, it is not necessary to keep thermal insulation around the compressor. Accordingly, with the present apparatus it is possible to use a weaker thermal insulation or to avoid it.

In addition, this apparatus makes it possible to limit the presence of air flows in the various pipes that are in the heat pump and which flows the refrigerant (especially at the compressor side). Usually, these pipes are in the air flow and are cooled, which can lead to a decrease in performance or require the addition of thermal insulation around the pipes. Here, the pipes are no longer in the air stream and the performance is improved.

According to the invention, the housing comprises a first component connectable to the heating device at the compressor element and a second component connectable to the heating device to form the air flow region. Advantageously, the two components are configured to physically separate the heat exchanger located in the air flow region from the compressor element. For example, the first component can surround, at least partially, the compressor element and the second component can surround, at least partially, the heat exchanger. It is noted that the both the first component and the second component can be directly connected to a portion of the heating device or indirectly connected to a portion of the heating device, i.e., by means of an interposed element.

The second component is at least in part fixable to, and removable from, the first component, the first component and the second component being both shaped to guide air to flow from the air inlet to the heat exchanger and from the heat exchanger to the air outlet. Specifically, the first component can be the bottom component of the housing and the second component can be the top component of the housing, wherein the first component represents a base on which several elements of the heating device can be accommodated and/or fixed. For example, the evaporator, the compressor, the expansion valve and the fan element can be accommodated on the second component of the housing. The second component is configured to be coupled to the first component and acts as a sort of cap and is used to separate the evaporator (and the fan element) from other elements present and arranged on the first component, such as the compressor. In addition to isolating the evaporator (and the fan element) from other elements of the heating device, by coupling the first component to the second component an air flow region is built in order to guide the air flow from the air inlet to the evaporator and from the evaporator to the air outlet. The first and second component are specifically shaped to confine air in the air flow region and to form a preferred path from the air inlet to the air outlet passing through the evaporator.

To fluidically isolate the evaporator from other elements of the heating device that could trigger an explosion in case of leakage of the flammable refrigerant fluid, the first component is connected to the second component to form a connecting region that is airtight and/or watertight. In this way, the apparatus ensures a good seal between the evaporator and the heating device, thereby improving the overall performance of the device. Indeed, if the heating device stops, the outside air penetrates into the apparatus but is confined in the housing. This apparatus is positioned within the overall heating device casing, providing two layers of thermal insulation.

According to the invention, the first component and the second component are one-piece parts This facilitates the manufacturing of these components and strongly reduces the risk of fluid passage from inside the housing in the air flow region and to outside the housing (of course with the exception of the air flowing through the air inlet and air outlet).

In ran example, the first component and the second component are both shaped to form a first seat, in particular for the placement of the heat exchanger. The first component comprises a recess where to fix, e.g. to slot in, the base of the evaporator and the second component comprises an internal concave region to accommodate, at least in part, the top of the evaporator.

In an additional example, the first component and the second component are both shaped to form a second seat, in particular for the placement of a fan element. Similar to the case of the first seat, the first component can comprise a recess where to fix, e.g. to slot in, the base of the fan element and the second component can comprise an internal concave region to accommodate, at least in part, the top of the fan element.

In a further example, the housing can comprise a base component interposed between at least the first component and the heating device to fix said first component to the heating device. In addition or in alternative, the housing can comprise a base component interposed between at least the second component and the heating device to fix said second component to the heating device.

In another example, the first component and the second component form a one-piece structure.

In one example, the air inlet and the air outlet are located on the second component and the heat exchanger and the compressor element are fixable to the first component. Advantageously, the connection of the first component with the second component produces a physical separation between the compressor and the evaporator, although they are both located on the same supporting base, i.e., the first component. Alternatively, the heat exchanger and the compressor element can be fixable to a base element interposed between at least the first component and/or the second component, and the heating device.

In an example, the apparatus further comprises a condensate drain outlet coupled to the heat exchanger to evacuate condensate resulting from heat exchange at the heat exchanger. In this way, the condensate resulting from the heat exchange at the evaporator can be safely evacuated.

In case the condensate drain is not properly functioning, i.e., it is obstructed, the apparatus can further comprise a safety drain outlet located in a bottom region of the housing to evacuate a fluid from the air flow region to the outside. For example, the safety drain outlet can be located in the first component of the housing. Accordingly, even if the condensate drain outlet is blocked by water, the, in particular flammable, refrigerant fluid will be able to escape through the safety drain outlet. This outlet is positioned at a low point and far from electronic devices, which ensures that the fluid will never fill the housing and risk entering the rest of the heating device environment or go to electronic devices.

In another example, the air inlet and the air outlet are both located in a top or lateral region of the housing. In a different configuration, the air inlet can be located in the top region, whereas the air outlet in the lateral region, or vice versa. The different location of the air inlet and outlet affects the shape of the housing, i.e. the shape of the first and second components of the housing in order to form the air flow region able to efficiently guide the air from the air inlet to the evaporator and from the evaporator to the air outlet.

In a further example, in order to make the apparatus compatible with the environment of the heating device, the housing is made of a polymeric material, in particular of foam plastic, more particularly of polypropylene expanded (PPE). Specifically, both the first and the second component are made of polymeric material, in particular of foam plastic, more particularly of polypropylene expanded (PPE).

In an additional example, in order to optimize air flow and limit aeraulic disturbances, an air duct connecting the air inlet to the air outlet comprises a variable cross-section. In particular, the cross-section of the air duct at the air inlet and at the air outlet can be different from the cross-section at the heat exchanger, wherein in particular the cross-section of the air duct at the air inlet and at the air outlet can be circular or cylindrical and the cross-section at the heat exchanger can be polygonal or angular shaped. Specifically, the air duct can have a progressive cross-section, for example increasing from the air inlet to the evaporator and decreasing form the evaporator to the air outlet.

In another example, the heating device further comprises at least a fan element, in particular a brushless fan, arranged inside the air flow region and coupled to the heat exchanger. In this way, the fan element is accommodated in the housing and, similarly to the heat exchanger, separated from the other elements of the heating device. The fan element serves to optimize the flowing of the air in the air flow region. Advantageously, the fan element can be placed downstream of the evaporator in the air flow region due to a lower air mass volume of the air. However, the fan element can also be placed upstream of the evaporator. In this way, it possible to manage refrigerant leaks at the evaporator regardless of the state of the heating device. **If** the fan element is running, the leak will be extracted from the air duct through the air outlet. If the fan element is off, since the refrigerant fluid is heavier than air, this fluid can escape through the condensate drain outlet and/or the safety drain outlet.

In an example, the air flow region comprises an air flow sub-region located between the fan element and the heat exchanger, the housing in said air flow sub-region being shaped to guide air from the heat exchanger to the air outlet. In the air flow sub-region the first and second components are shaped to form a volute structure to improve the fan element performances. Also, in this air flow sub-region the first and second components are shaped to form conduit to improve the air flow guiding from the evaporator to the fan element.

According to another example, to increase the safety of the heating device, any ignition source is arranged outside the air flow circulating region, i.e. outside the housing.

In an example, at least a portion of the housing is part of the heating device. The apparatus can be composed of specific parts or can be integrated with parts that are also used for the structure of the heating device, such as a heat pump base or the outer casing of the heat pump. In particular, the apparatus can therefore be located inside the heating device and covered by the casing parts or be part of the casing itself.

In another aspect of the invention, a heating device, in particular a heat pump water heater using a flammable refrigerant, is provided, the heating device comprising the inventive apparatus.

According to an example, the heating device comprises a capping element configured to be coupled to a top region of the heating device and covering the housing of the apparatus, the capping element comprising a first opening coupled to the air inlet of the housing and a second opening coupled to the air outlet of the housing, wherein between the first opening and the air inlet and between the second opening and the air outlet are provided sealing means.

In a further aspect of the invention, a use of the inventive flow guiding apparatus is provided. The inventive flow guiding apparatus is used in a heating device, in particular a heat pump water heater using a flammable refrigerant.

In the figures, the subject-matter of the invention is schematically shown, wherein identical or similarly acting elements are usually provided with the same reference signs.
- Figure 1: shows a schematic representation of the flow guiding apparatus according to an example.
- Figures 2A-B: show a perspective view of the apparatus with and without the second component according to an example.
- Figures 3A-B: show a perspective view of the apparatus with and without the second component according to an example.
- Figures 4A-B: show a perspective view of the heating device and the capping element according to an example, wherein the figure 4A is a cross-section view.

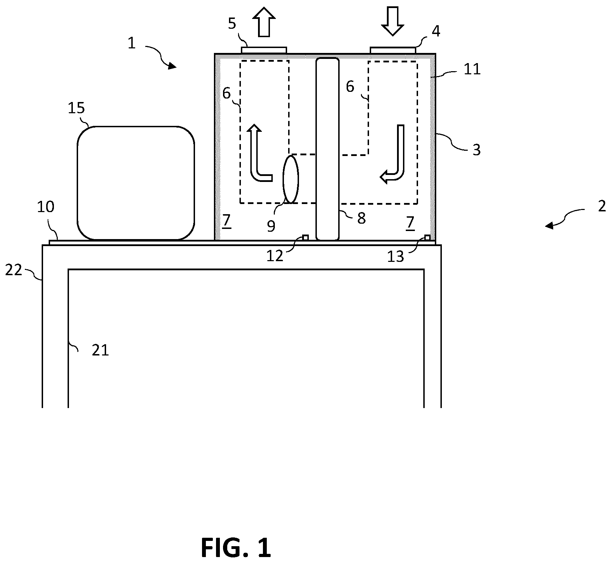

Figure 1 illustrates the apparatus 1 for guiding the air flow in a schematic representation. The apparatus 1 can be coupled to a heating device 2, for example a heat pump water heater. The heating device 2 comprises at least one heat exchanger such as an evaporator 8 to absorb heat from the air and transfer it to the refrigerant fluid circulating in said evaporator 8. Thus, the fluid will be able to change from an at least partially liquid to a gaseous state. The evaporator 8 is crossed by an air circulating path receiving air from outside. The fluid at low pressure is conducted to a compressor 15 coupled to the evaporator 8 and is then directed to another heat exchanger, such as a condenser (not shown in the figure) for a heat transfer with a water tank 21. Both the evaporator 8 and the compressor 15 are located on a top region of the heating device 2 and the water tank 21 is located in a bottom region of the heating device 2 inside a casing 22.

The apparatus 1 comprises a housing 3 having a first component 10 and a second component 11. It is noted that the first component 10 represents a base element on which several elements of the heating device are arranged. The first component 10 can be fixed to the top of the casing 22 of the heating device 2. The second component 11 is, on the other hand, a capping structure that can be fixed to, and removed from, the first component 10. The second component 11 is schematically illustrated in figure 1 with a grey border. It is noted that according to the figure, when the second component 11 is coupled to the first component 10, the second component 11 is not configured to completely cover/cap the entire surface of the first component 10. As a matter of fact, when the second component 11 is coupled to the first component 10, an air flow region 7 is formed and some of the elements arranged on the first component 10, such as the compressor 15, are located outside said region 7, whereas other elements, such as the evaporator 8 are located in the air flow region 7. Alternatively, the second component 11 can completely cover the surface of the first component 10. In this case, the second component 11 could also function as a capping of the heat pump compartment and could comprise at least two separated closed regions containing the air flow region 7 and the compressor 15, respectively.

The housing 3 comprises an air inlet 4, an air outlet 5 and an air duct 6 connecting the air inlet 4 to the air outlet 5. It is noted that the air duct 6 comprises a first sub-duct comprised between the air inlet 4 and the evaporator 8 and a second sub-duct comprised between the evaporator 8 and the air outlet 5. Environmental air at a certain temperature enters the air inlet 4, crosses the evaporator 8, and exits the air outlet 5 at a lower temperature. To improve the air conduction to the air outlet 5, a fan element 9 is located downstream of the evaporator 8 in the portion of the air duct 6 between the evaporator 8 and the air outlet 5.

The use of the apparatus 1 in a heating device 2, like a heat pump unit of a thermodynamic water heater operating with a flammable refrigerant heavier than air, is very useful. As a matter of fact, the apparatus 1 does not incorporate any ignition source (hot source or with activation energy). This apparatus 1 has a housing 3 allowing an air flow to enter and exit the apparatus 1 passing through the evaporator. Since the apparatus 1 is sealed from the rest of the heat pump compartment, it prevents the transfer of fluids (flammable gas in the event of a leak, water from condensate, air flow, etc.) to other element that are not in the housing 3. This avoids the risk of ignition in the event of a gas leak in the circuit contained in housing 3 or rather in the air flow region 7. It also improves the acoustics of the product thanks to an efficient and leakage-free airflow control. This also avoids water stagnation and corrosion. As a matter of fact, trenches and openings are included in the room to allow for fluid flow. In particular, a condensate drain outlet 12 is located between the bottom of the fan space and the evaporator space to allow for water flow (splash, condensation, etc.). In order to cope with the possibility of an obstruction of the condensate drain outlet 12, an additional opening, i.e., a safety drain outlet 13, is present at a lower level than air outlet 5 and air inlet 4.

The housing 3, i.e., the first component 10 and the second component 11, is made of a material compatible with this environment and is preferably made of foamed plastic such as expanded polypropylene.

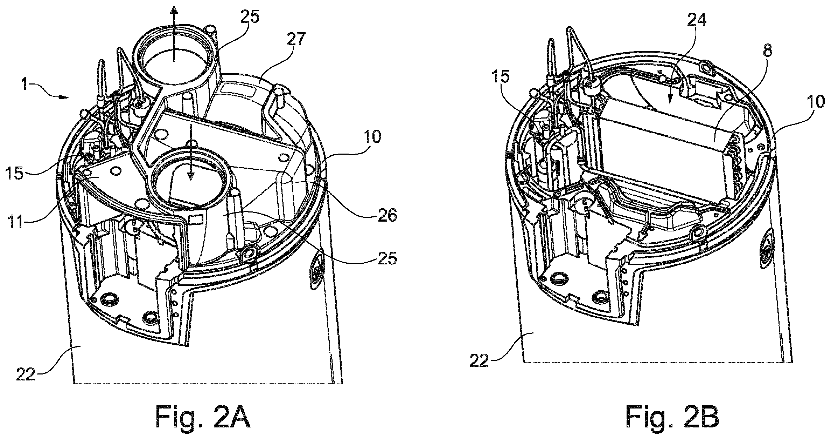

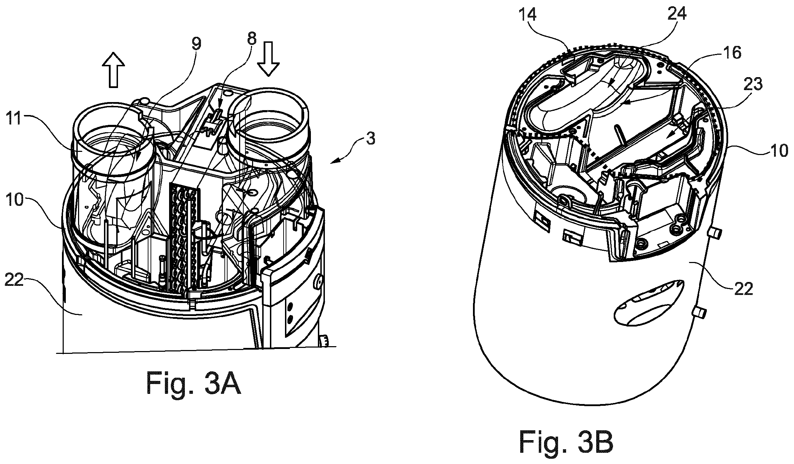

Figures 2A-2B and 3A-3B illustrate a perspective view of the apparatus 1 coupled to a heating device 2, in particular coupled to the top portion of the casing 22 of the heating device 2. Figures 2A and 2B show a first configuration, wherein the second component 11 is coupled to the first component 10 (Fig. 2A) and a second configuration, wherein the second component 11 is removed from the first component 11 (Fig. 2B). It is noted that the second component 11 is a sort of convex cap suitably shaped to allow the arrangement of elements, such as the evaporator 8 and fan element 9 inside the housing 3, and to form an air duct 6 from the air inlet 4 to the air outlet 5 passing through the evaporator 8. For example, the second component 11 has an air flow portion 25 at the air inlet 4 and air outlet 5, the air flow portion 25 having a cylindrical shape. Also, the second component 11 has an evaporator portion 26 at the evaporator 8, the evaporator portion 26 having a polygonal outline to allow the arrangement of the upper part of the evaporator 8 that usually has a parallelepiped form (see figure 2B). Additionally, the second component 11 has a fan portion 27, having a curved shape to allow the arrangement of the upper part of the fan 9 that usually has a circular form. In a similar way, the first component 10 is suitably shaped to allow the arrangement of elements, such as the evaporator 8 and fan element 9 inside the housing 3, and to form an air duct 6 from the air inlet 4 to the air outlet 5 passing through the evaporator 8. Figure 2B shows for example that the first component is provided with a dedicated seat (or second seat) 24 for the fan element 9 having a curved shape. An analogous dedicated seat (or first seat) 23 for the evaporator 8 is also provided in the first component 10, this seat 23 having a rectangular, polygonal shape. The first seat 23 is a rectangular slot for inserting the lower part of the evaporator 8. This is illustrated for example in figure 3B.

By comparing figures 2A and 2B, it is noted that when the second component 11 is removed from the first component 10, different elements of the heating device 2, such as the evaporator 8 and the compressor 15 are located in the same environment. In other words, air flowing through the evaporator 8 could also pass close to the compressor 15.

This is basically the standard situation described in prior art. On the other hand, when the second component 11 is coupled to the first component 10, the evaporator 8 is separated from the compressor 15 and the walls of the second component 11 prevent air flowing in the air duct 6 from the air inlet 4 to the air outlet 5 to be in contact with the compressor 15.

Figure 3A illustrates in detail the coupling of the second component 11 to the first component 10 and the arrangement of elements, such as the evaporator 8 and the fan element 9, inside the housing 3 in the air flow region 7. To better appreciate the location of the evaporator 8 and the fan element 9 the second component 11 is shown such that the evaporator 8 and the fan element 9 are visible.

Figure 3B shows the first seat 23 dedicated for arranging the evaporator 8 on the first component 10 and the second seat 24 dedicated for arranging the fan element 9. An air flow sub-region 16 is located between the first seat 23 and the second seat 24. In this air flow sub-region 16, the housing 3, and in particular the first component 10 and second component 11 are shaped to guide air from the evaporator 8 to the air outlet 5. In the air flow sub-region 16 the first and second components 10, 11 are shaped to form a volute structure to improve the performances of the fan element 9. Also, in this air flow sub-region 16 the first and second components 10, 11 are shaped to form conduit to improve the air flow guiding from the evaporator 8 to the fan element 9.

Figure 3B also shows a connection region 14, represented with a dotted line in the figure, this region 14 being the contact portion between the first component 10 and the second component 11. In other words, the connection region 14 is the external border of the air flow region 7 and defines the outline inside which the elements (e.g. the evaporator 8, the fan element 9) are confined in the air flow region 7. At the connection region 14, the housing 3 is water-sealed and air-sealed from the rest of the heat pump compartment.

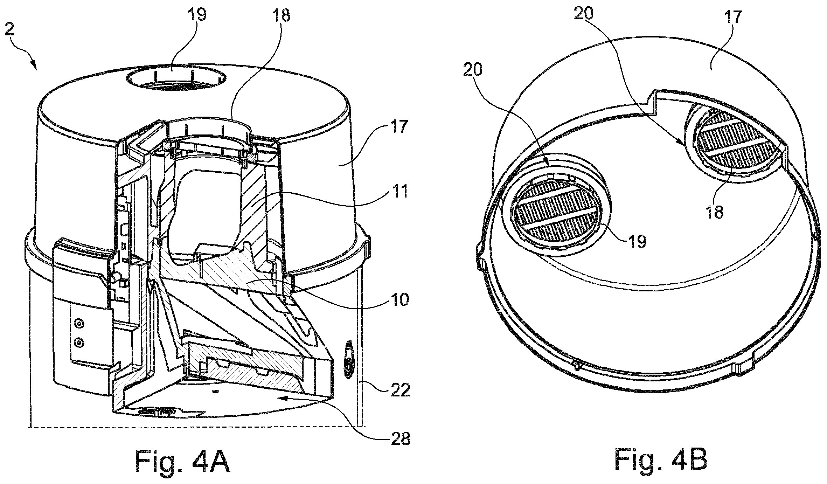

Figure 4A shows the presence of a capping element 17 that can be coupled to the upper portion of the casing 22 of the heating device 2. The capping element 17 basically covers the elements of the top of the casing 22, thereby also covering the apparatus 1, i.e., the first component 10 and the second component 11. The capping element 17 comprises a first opening 18 coupled to the air inlet 4 and a second opening 19 coupled to the air outlet 5. Figure 4A shows a sliced cross-section of the heating device 2 including the apparatus 1. The figure basically shows the presence of the first and second components 10, 11 without the evaporator 8 and the fan element 9. It is noted that the second component 11 is connected to the first component 10 through a joint mechanism made of recessing and protruding elements and that below the first component 10 there is a lower region 28 where to arrange the condenser and the water tank (not shown in the figure). Figure 4B shows a bottom view of the cap element 17. It is noted that the first and second openings 18, 19 are provided with sealing means 20 for determining a sealed coupling with the air inlet 4 and air outlet 5 of the flow guiding apparatus 1.

### Reference Signs

- 1: Flow guiding apparatus
- 2: Heating device
- 3: Housing
- 4: Air inlet
- 5: Air outlet
- 6: Air duct
- 7: Air flow region
- 8: Heat exchanger
- 9: Fan element
- 10: First component
- 11: Second component
- 12: Condensate drain outlet
- 13: Safety drain outlet
- 14: Connecting region
- 15: Compressor element
- 16: Air flow sub-region
- 17: Capping element
- 18: First opening
- 19: Second opening
- 20: Sealing means
- 21: Water tank
- 22: Casing
- 23: First seat
- 24: Second seat
- 25: Air flow portion
- 26: Evaporator portion
- 27: Fan portion
- 28: Lower region

## Claims

1. Flow guiding apparatus (1) for a heating device (2), in particular an air-source heat pump water heater using a flammable refrigerant, the heating device (2) including at least a heat exchanger (8) and a compressor element (15), the apparatus (1) comprising:
a housing (3) couplable to a casing of the heating device (2) and comprising an air inlet (4) and an air outlet (5), the housing (3) defining an air flow region (7),
wherein the housing (3) is configured so that the heat exchanger (8) is arranged inside the air flow region (7) for exchanging heat in said air flow region (7), and so that air is guided to flow from the air inlet (4) to the heat exchanger (8) and from the heat exchanger (8) to the air outlet (5), the air being confined in the air flow region (7) and being prevented from being in contact with the compressor element (15) that is arranged outside the air flow region (7)
**characterized in that** the housing (3) comprises:
(i) a first component (10) for holding the heat exchanger (8) and the compressor element (15) connectable to the heating device (2) and
(ii) a second component (11) connectable to the heating device (2), to form the air flow region (7), wherein
a. the second component (11) is at least in part fixable to, and removable from, the first component (10), the first component (10) and the second component (11) being both shaped to guide air to flow from the air inlet (4) to the heat exchanger (8) and from the heat exchanger (8) to the air outlet (5);
b. the first component (10) is connected to the second component (11) to form a connecting region (14) that is airtight and/or watertight; and
c. the first component (10) and the second component (11) are one-piece parts.

2. Apparatus (1) according to claim 1, **characterized in that**
a. the first component (10) and the second component (11) are both shaped to form a first seat (23), in particular for the placement of the heat exchanger (8); and/or
b. the first component (10) and the second component (11) are both shaped to form a second seat (24), in particular for the placement of a fan element (9); and/or
c. the housing (3) comprises a base component interposed between at least the first component (10) and the heating device (2) to fix said first component (10) to the heating device (2); and/or
d. the housing (3) comprises a base component interposed between at least the second component (11) and the heating device (2) to fix said second component (11) to the heating device (2); and/or
e. the first component (10) and the second component (11) form a one-piece structure.

3. Apparatus (1) according to any one of claims 1 to 2, **characterized in that** the air inlet (4) and the air outlet (5) are located on the second component (11) and/or the heat exchanger (8) and the compressor element (15) are fixable to the first component (10) or to a base element interposed between at least the first component (10) and/or the second component (11), and the heating device (2).

4. Apparatus (1) according to any one of claims 1 to 3, **characterized in that** the apparatus (1) further comprises
a. a condensate drain outlet (12) coupled to the heat exchanger (8) to evacuate condensate resulting from heat exchange at the heat exchanger (8); and/or
b. a safety drain outlet (13) located in a bottom region of the housing (3) to evacuate a fluid, in particular the flammable refrigerant, from the air flow region (7) to the outside.

5. Apparatus (1) according to any one of claims 1 to 4, **characterized in that** the air inlet (4) and the air outlet (5) are both located in a top or lateral region of the housing (3).

6. Apparatus (1) according to any one of claims 1 to 5, **characterized in that** the housing (3) is made of a polymeric material, in particular of foam plastic, more particularly of polypropylene expanded (PPE).

7. Apparatus (1) according to any one of claims 1 to 6, **characterized in that** an air duct (6) connecting the air inlet (4) to the air outlet (5) comprises a variable cross-section.

8. Apparatus (1) according to claim 7, **characterized in that** the cross-section of the air duct (6) at the air inlet (4) and at the air outlet (5) is different from the cross-section at the heat exchanger (8), wherein in particular the cross-section of the air duct (6) at the air inlet (4) and at the air outlet (5) is circular and the cross-section at the heat exchanger (8) is polygonal.

9. Apparatus (1) according to any one of claims 1 to 8, **characterized in that** the heating device (2) further comprises at least a fan element (9), in particular a brushless fan, arranged inside the air flow region (7) and coupled to the heat exchanger (8).

10. Apparatus (1) according to claim 9, **characterized in that** the air flow region (7) comprises an air flow sub-region (16) located between the fan element (9) and the heat exchanger (8), the housing (3) in said air flow sub-region (16) being shaped to guide air from the heat exchanger (8) to the air outlet (5).

11. Apparatus (1) according to any one of claims 1 to 10, **characterized in that**
a. any ignition source is arranged outside the air flow region (7) and/or
b. at least a portion of the housing (3) is part of the heating device (2).

12. Heating device (2), in particular a heat pump water heater using a flammable refrigerant, comprising the apparatus (1) according to any one of clams 1 to 11.

13. Heating device (2) according to claim 12, further comprising a capping element (17) configured to be coupled to a top region of the heating device (2) and covering the housing (3) of the apparatus (1), the capping element (17) comprising a first opening (18) coupled to the air inlet (4) of the housing (3) and a second opening (19) coupled to the air outlet (5) of the housing (3), wherein between the first opening (18) and the air inlet (4) and between the second opening (19) and the air outlet (5) are provided sealing means (20).

14. Use of the flow guiding apparatus (1) according to one of clams 1 to 11 in a heating device (2), in particular a heat pump water heater using a flammable refrigerant.

## Patentansprüche

1. Strömungsleitvorrichtung (1) für eine Heizvorrichtung (2), insbesondere einen Luftwärmepumpen-Wassererhitzer, der ein brennbares Kältemittel verwendet, wobei die Heizvorrichtung (2) mindestens einen Wärmetauscher (8) und ein Kompressorelement (15) beinhaltet, wobei die Vorrichtung (1) Folgendes umfasst:
ein Gehäuse (3), das mit einem Gehäuse der Heizvorrichtung (2) koppelbar ist und einen Lufteinlass (4) sowie einen Luftauslass (5) umfasst, wobei das Gehäuse (3) einen Luftströmungsbereich (7) definiert,
wobei das Gehäuse (3) so konfiguriert ist, dass der Wärmetauscher (8) innerhalb des Luftströmungsbereichs (7) angeordnet ist, um in dem Luftströmungsbereich (7) Wärme auszutauschen, so dass Luft so geleitet wird, dass sie vom Lufteinlass (4) zum Wärmetauscher (8) und vom Wärmetauscher (8) zum Luftauslass (5) strömt, wobei die Luft im Luftströmungsbereich (7) eingeschlossen ist und daran gehindert wird, mit dem Kompressorelement (15) in Kontakt zu kommen, das außerhalb des Luftströmungsbereichs (7) angeordnet ist, und
**dadurch gekennzeichnet, dass** das Gehäuse (3) umfasst:
(i) ein erstes Bauteil (10) zum Halten des Wärmetauschers (8) und des Kompressorelements (15), das mit der Heizvorrichtung (2) verbunden werden kann, und
(ii) ein zweites Bauteil (11), das mit der Heizvorrichtung (2) verbunden werden kann, um den Luftstrombereich (7) zu bilden, wobei
a. die zweite Komponente (11) zumindest teilweise an der ersten Komponente (10) fixierbar und von dieser abnehmbar ist, wobei sowohl die erste Komponente (10) als auch die zweite Komponente (11) so geformt sind, dass sie die Luft leiten, um vom Lufteinlass (4) zum Wärmetauscher (8) und vom Wärmetauscher (8) zum Luftauslass (5) zu strömen;
b. die erste Komponente (10) mit der zweiten Komponente (11) verbunden ist, um einen luft- und/oder wasserdichten Verbindungsbereich (14) zu bilden; und
c. die erste Komponente (10) und die zweite Komponente (11) einteilige Teile sind.

2. Vorrichtung (1) nach Anspruch 1, **dadurch gekennzeichnet, dass**
a. die erste Komponente (10) und die zweite Komponente (11) beide so geformt sind, dass sie einen ersten Sitz (23) bilden, insbesondere zur Aufnahme des Wärmetauschers (8); und/oder
b. sowohl die erste Komponente (10) als auch die zweite Komponente (11) so geformt sind, dass sie einen zweiten Sitz (24) bilden, insbesondere zur Aufnahme eines Lüfterelements (9); und/oder
c. das Gehäuse (3) eine Basiskomponente umfasst, die zwischen mindestens der ersten Komponente (10) und der Heizvorrichtung (2) zwischengesetzt ist, um die erste Komponente (10) an der Heizvorrichtung (2) zu fixieren; und/oder
d. das Gehäuse (3) eine Basiskomponente umfasst, die zwischen mindestens der zweiten Komponente (11) und der Heizvorrichtung (2) zwischengesetzt ist, um die zweite Komponente (11) an der Heizvorrichtung (2) zu fixieren; und/oder
e. die erste Komponente (10) und die zweite Komponente (11) eine einteilige Struktur bilden.

3. Vorrichtung (1) nach einem der Ansprüche 1 bis 2, **dadurch gekennzeichnet, dass** sich der Lufteinlass (4) und der Luftauslass (5) an der zweiten Komponente (11) befinden und/oder der Wärmetauscher (8) und das Kompressorelement (15) an der ersten Komponente (10) oder an einem zwischengesetzten Basiselement fixierbar sind, das zwischen mindestens der ersten Komponente (10) und/oder der zweiten Komponente (11) zwischengesetzt ist, und der Heizvorrichtung (2).

4. Vorrichtung (1) nach einem der Ansprüche 1 bis 3, **dadurch gekennzeichnet, dass** die Vorrichtung (1) ferner
a. einen Kondensatablauf (12) umfasst, der mit dem Wärmetauscher (8) gekoppelt ist, um das beim Wärmeaustausch am Wärmetauscher (8) entstehende Kondensat abzuführen; und/oder
b. einen Sicherheitsablauf (13) umfasst, der in einem unteren Bereich des Gehäuses (3) angeordnet ist, um ein Fluid, insbesondere das brennbare Kältemittel, aus dem Luftströmungsbereich (7) nach außen abzuführen.

5. Vorrichtung (1) nach einem der Ansprüche 1 bis 4, **dadurch gekennzeichnet, dass** sich sowohl der Lufteinlass (4) als auch der Luftauslass (5) beide in einem oberen oder seitlichen Bereich des Gehäuses (3) befinden.

6. Vorrichtung (1) nach einem der Ansprüche 1 bis 5, **dadurch gekennzeichnet, dass** das Gehäuse (3) aus einem polymeren Material, insbesondere aus Schaumkunststoff, genauer aus expandiertem Polypropylen (PPE), besteht.

7. Vorrichtung (1) nach einem der Ansprüche 1 bis 6, **dadurch gekennzeichnet, dass** ein den Lufteinlass (4) mit dem Luftauslass (5) verbindender Luftkanal (6) einen variablen Querschnitt umfasst.

8. Vorrichtung (1) nach Anspruch 7, **dadurch gekennzeichnet, dass** der Querschnitt des Luftkanals (6) am Lufteinlass (4) und am Luftauslass (5) sich vom Querschnitt des Wärmetauschers (8) unterscheidet, wobei insbesondere der Querschnitt des Luftkanals (6) am Lufteinlass (4) und am Luftauslass (5) kreisförmig ist und der Querschnitt am Wärmetauscher (8) polygonal ist.

9. Vorrichtung (1) nach einem der Ansprüche 1 bis 8, **dadurch gekennzeichnet, dass** die Heizvorrichtung (2) ferner mindestens ein Lüfterelement (9), insbesondere einen bürstenlosen Lüfter, umfasst, das innerhalb des Luftstrombereichs (7) angeordnet und mit dem Wärmetauscher (8) verbunden ist.

10. Vorrichtung (1) nach Anspruch 9, **dadurch gekennzeichnet, dass** der Luftstrombereich (7) einen zwischen dem Lüfterelement (9) und dem Wärmetauscher (8) befindlichen Luftstrombereich (16) umfasst, wobei das Gehäuse (3) in diesem Luftstrombereich (16) so geformt ist, dass es Luft vom Wärmetauscher (8) zum Luftauslass (5) leitet.

11. Vorrichtung (1) nach einem der Ansprüche 1 bis 10, **dadurch gekennzeichnet, dass**
a. eine Zündquelle außerhalb des Luftströmungsbereichs (7) angeordnet ist und/oder
b. mindestens ein Abschnitt des Gehäuses (3) Bestandteil der Heizvorrichtung (2) ist.

12. Heizvorrichtung (2), insbesondere ein Wärmepumpen-Warmwasserbereiter, der ein brennbares Kältemittel verwendet, umfassend die Vorrichtung (1) nach einem der Ansprüche 1 bis 11.

13. Heizvorrichtung (2) nach Anspruch 12, ferner umfassend ein Abdeckelement (17), das so konfiguriert ist, dass es mit einem oberen Bereich der Heizvorrichtung (2) gekoppelt wird und das Gehäuse (3) der Vorrichtung (1) abdeckt, wobei das Abdeckelement (17) eine erste Öffnung (18), die mit dem Lufteinlass (4) des Gehäuses (3) gekoppelt ist, und eine zweite Öffnung (19) aufweist, die mit dem Luftauslass (5) des Gehäuses (3) gekoppelt ist, wobei zwischen der ersten Öffnung (18) und dem Lufteinlass (4) sowie zwischen der zweiten Öffnung (19) und dem Luftauslass (5) Dichtungsmittel (20) bereitgestellt sind.

14. Verwendung der Strömungsleitvorrichtung (1) gemäß einem der Ansprüche 1 bis 11 in einer Heizvorrichtung (2), insbesondere in einem Wärmepumpen-Warmwasserbereiter, der ein brennbares Kältemittel verwendet.

## Revendications

1. Dispositif de guidage de flux (1) pour un appareil de chauffage (2), notamment un chauffe-eau à pompe à chaleur à source d'air utilisant un fluide frigorigène inflammable, l'appareil de chauffage (2) comportant au moins un échangeur de chaleur (8) et un élément compresseur (15), le dispositif (1) comprenant :
un logement (3) pouvant être accouplé à un boîtier de l'appareil de chauffage (2) et comprenant une entrée d'air (4) et une sortie d'air (5), le logement (3) délimitant une région d'écoulement d'air (7),
dans lequel le logement (3) est conçu de sorte que l'échangeur de chaleur (8) est agencé à l'intérieur de la région d'écoulement d'air (7) pour échanger de la chaleur dans ladite région d'écoulement d'air (7), et de sorte que l'air est guidé pour s'écouler de l'entrée d'air (4) à l'échangeur de chaleur (8) et de l'échangeur de chaleur (8) à la sortie d'air (5), l'air étant confiné dans la région d'écoulement d'air (7) et empêché d'entrer en contact avec l'élément compresseur (15) qui est agencé à l'extérieur de la région d'écoulement d'air (7)
**caractérisé en ce que** le logement (3) comprend :
(i) un premier composant (10) destiné à maintenir l'échangeur de chaleur (8) et l'élément compresseur (15) dans un état pouvant être raccordé à l'appareil de chauffage (2) et
(ii) un second composant (11) pouvant être raccordé à l'appareil de chauffage (2), pour former la région d'écoulement d'air (7), dans lequel
a. le second composant (11) peut, au moins en partie, être fixé au premier composant (10) et retiré de celui-ci, le premier composant (10) et le second composant (11) étant tous deux conçus pour guider de l'air de manière à ce qu'il s'écoule, de l'entrée d'air (4) vers l'échangeur de chaleur (8) et de l'échangeur de chaleur (8) vers la sortie d'air (5) ;
b. le premier composant (10) est raccordé au second composant (11) pour former une région de raccordement (14) qui est étanche à l'air et/ou à l'eau ; et
c. le premier composant (10) et le second composant (11) sont des pièces monoblocs.

2. Dispositif (1) selon la revendication 1, **caractérisé en ce que**
a. le premier composant (10) et le second composant (11) sont tous deux conçus pour former un premier support (23), notamment pour la mise en place de l'échangeur de chaleur (8) ; et/ou
b. le premier composant (10) et le second composant (11) sont tous deux conçus pour former un second support (24), notamment pour la mise en place d'un élément ventilateur (9) ; et/ou
c. le logement (3) comprend un composant de base interposé entre au moins le premier composant (10) et l'appareil de chauffage (2) afin de fixer ledit premier composant (10) à l'appareil de chauffage (2) ; et/ou
d. le logement (3) comprend un composant de base interposé entre au moins le second composant (11) et l'appareil de chauffage (2) afin de fixer ledit second composant (11) à l'appareil de chauffage (2) ; et/ou
e. le premier composant (10) et le second composant (11) forment une structure monobloc.

3. Dispositif (1) selon l'une quelconque des revendications 1 à 2, **caractérisé en ce que** l'entrée d'air (4) et la sortie d'air (5) sont situées sur le second composant (11) et/ou l'échangeur de chaleur (8) et l'élément compresseur (15) peuvent être fixés au premier composant (10) ou à un élément de base interposé entre au moins le premier composant (10) et/ou le second composant (11), et l'appareil de chauffage (2).

4. Dispositif (1) selon l'une quelconque des revendications 1 à 3, **caractérisé en ce que** le dispositif (1) comprend en outre
a. une sortie de drainage de condensats (12) accouplée à l'échangeur de chaleur (8) pour évacuer les condensats provenant de l'échange de chaleur au niveau de l'échangeur de chaleur (8) ; et/ou
b. une sortie de drainage de sécurité (13) située dans une région de fond du logement (3) pour évacuer un fluide, notamment le fluide frigorigène inflammable, de la région d'écoulement d'air (7) vers l'extérieur.

5. Dispositif (1) selon l'une quelconque des revendications 1 à 4, **caractérisé en ce que** l'entrée d'air (4) et la sortie d'air (5) sont toutes deux situées dans une région de sommet ou latérale du logement (3).

6. Dispositif (1) selon l'une quelconque des revendications 1 à 5, **caractérisé en ce que** le logement (3) est fait d'un matériau polymère, notamment de mousse plastique, plus particulièrement de polypropylène expansé (PPE).

7. Dispositif (1) selon l'une quelconque des revendications 1 à 6, **caractérisé en ce qu'**un conduit d'air (6) raccordant l'entrée d'air (4) à la sortie d'air (5) comprend une section transversale variable.

8. Dispositif (1) selon la revendication 7, **caractérisé en ce que** la section transversale du conduit d'air (6) au niveau de l'entrée d'air (4) et de la sortie d'air (5) est différente de la section transversale au niveau de l'échangeur de chaleur (8), dans lequel, notamment, la section transversale du conduit d'air (6) au niveau de l'entrée d'air (4) et de la sortie d'air (5) est circulaire et la section transversale au niveau de l'échangeur de chaleur (8) est polygonale.

9. Dispositif (1) selon l'une quelconque des revendications 1 à 8, **caractérisé en ce que** l'appareil de chauffage (2) comprend en outre au moins un élément ventilateur (9), notamment un ventilateur sans balais, agencé à l'intérieur de la région d'écoulement d'air (7) et accouplé à l'échangeur de chaleur (8).

10. Dispositif (1) selon la revendication 9, **caractérisé en ce que** la région d'écoulement d'air (7) comprend une sous-région d'écoulement d'air (16) située entre l'élément ventilateur (9) et l'échangeur de chaleur (8), le logement (3) dans ladite sous-région d'écoulement d'air (16) étant conçu pour guider l'air de l'échangeur de chaleur (8) vers la sortie d'air (5).

11. Dispositif (1) selon l'une quelconque des revendications 1 à 10, **caractérisé en ce que**
a. une quelconque source d'allumage est agencée à l'extérieur de la région d'écoulement d'air (7) et/ou
b. au moins une partie du logement (3) fait partie de l'appareil de chauffage (2).

12. Appareil de chauffage (2), notamment un chauffe-eau à pompe à chaleur utilisant un fluide frigorigène inflammable, comprenant le dispositif (1) selon l'une quelconque des revendications 1 à 11.

13. Appareil de chauffage (2) selon la revendication 12, comprenant en outre un élément de recouvrement (17) configuré pour être accouplé à une région de sommet de l'appareil de chauffage (2) et couvrant le logement (3) du dispositif (1), l'élément de recouvrement (17) comprenant une première ouverture (18) accouplée à l'entrée d'air (4) du logement (3) et une seconde ouverture (19) accouplée à la sortie d'air (5) du logement (3), dans lequel, entre la première ouverture (18) et l'entrée d'air (4) et entre la seconde ouverture (19) et la sortie d'air (5) sont disposés des moyens d'étanchéité (20).

14. Utilisation du dispositif de guidage d'écoulement (1) selon l'une des revendications 1 à 11 dans un appareil de chauffage (2), notamment un chauffe-eau à pompe à chaleur utilisant un fluide frigorigène inflammable.
